(19) Europäisches Patentamt
European Patent Office
Office européen des brevets

(11) **EP 3 839 428 A1**

(12) **EUROPÄISCHE PATENTANMELDUNG**

(43) Veröffentlichungstag:
**23.06.2021   Patentblatt 2021/25**

(51) Int Cl.:
**G01C 15/00** (2006.01)      **G01C 15/06** (2006.01)

(21) Anmeldenummer: **19216525.6**

(22) Anmeldetag: **16.12.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Hilti Aktiengesellschaft**
**9494 Schaan (LI)**

(72) Erfinder:
• **Dang, Lieu-Kim**
**9473 Gams (CH)**
• **Winter, Andreas**
**6800 Feldkirch (AT)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM BESTIMMEN EINES ABSTANDES ZWISCHEN EINEM LASERSYSTEM UND EINER PROJEKTIONSFLÄCHE**

(57)      Verfahren zum Bestimmen eines Abstandes (D) zwischen einem Lasersystem (11) und einer Projektionsfläche (14), bei dem ein Retroreflektor (13), der aus absorbierenden Abschnitten und reflektierenden Abschnitten zusammengesetzt ist, auf der Projektionsfläche (14) angeordnet wird und mithilfe eines Detektors (12) ein am Retroreflektor (13) reflektierter Laserstrahls (39) erfasst wird. Der Abstand (D) wird mittels einer Zeitdifferenz, einer Drehzahl des Lasersystems (11) und einer Breite der absorbierenden und reflektierenden Abschnitte berechnet.

**FIG. 1**

EP 3 839 428 A1

**Beschreibung**

**Technisches Gebiet**

Die vorliegende Erfindung betrifft ein Verfahren zum Bestimmen eines Abstandes zwischen einem Lasersystem und einer Projektionsfläche gemäß dem Oberbegriff des Anspruchs 1.

**Stand der Technik**

Um Nivellier- oder Markierungsarbeiten im Innen- und Außenbereich durchzuführen, sind Lasersysteme bekannt, die auf einer Projektionsfläche eine linienförmige Lasermarkierung erzeugen. Bei diesen Lasersystemen wird unterschieden zwischen Rotationslasern, die die linienförmige Lasermarkierung durch Rotation einer Strahlumlenkoptik um eine Rotationsachse erzeugen, und Linienlasern, die die linienförmige Lasermarkierung mithilfe einer Strahlformungsoptik, beispielsweise einer Zylinderlinse, einem Prisma oder einem Kegelspiegel, erzeugt. Damit die bekannten Lasersystemen ohne Schutzmaßnahmen in Form von Schutzbrillen und Reflektoren eingesetzt werden können, muss die Laserleistung begrenzt werden, um Schäden des menschlichen Auges zu verhindern. Für Lasersysteme der Laserklasse 2 oder 2M beträgt die maximal zulässige Laserleistung 1 mW.

Durch die Begrenzung der Laserleistung auf Werte kleiner als 1 mW weisen bekannte Lasersysteme der Laserklasse 2 oder 2M den Nachteil auf, dass die linienförmige Lasermarkierung auf der Projektionsfläche schlecht sichtbar ist. Dabei gilt, dass die linienförmige Lasermarkierung umso schlechter sichtbar ist, je breiter die Lasermarkierung auf der Projektionsfläche ist, da die Sichtbarkeit mit sinkender Leistungsdichte abnimmt. Außerdem ist die Qualität der linienförmigen Lasermarkierung auf der Projektionsfläche vom Abstand des Lasersystem zur Projektionsfläche abhängig.

**Darstellung der Erfindung**

Die Aufgabe der vorliegenden Erfindung besteht in der Entwicklung eines Verfahrens zum Bestimmen eines Abstandes zwischen einem Lasersystem und einer Projektionsfläche. Dabei soll der apparative Aufwand möglichst gering sein, wobei insbesondere Anpassungen am Strahlengang des Lasersystems vermieden werden sollen.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zum Bestimmen eines Abstandes zwischen einem Lasersystem und einer Projektionsfläche weist erfindungsgemäß folgende Schritte auf:

- Anordnen eines Retroreflektors auf der Projektionsfläche, wobei der Retroreflektor in einer Umfangsrichtung abwechselnd aus absorbierenden Abschnitten, die einen Laserstrahl des Lasersystems absorbieren, und reflektierenden Abschnitten, die einen Laserstrahl des Lasersystems reflektieren, zusammengesetzt ist,
- Aussenden eines Laserstrahls und Rotieren des Laserstrahls mit einer Drehzahl um die Rotationsachse,
- Bestimmen der Intensität eines am Retroreflektor reflektierten Laserstrahls mittels eines Detektors,
- Darstellen der Intensität des reflektierten Laserstrahls abhängig von der Zeit in einer Intensitätskurve,
- Bestimmen einer Zeitdifferenz zwischen Maximalwerten, zwischen Minimalwerten oder zwischen Maximal- und Minimalwerten der Intensitätskurve und
- Berechnen des Abstandes zwischen dem Lasersystem und der Projektionsfläche mittels der Zeitdifferenz, der Drehzahl des Lasersystems und einer Breite der absorbierenden und reflektierenden Abschnitte.

Beim erfindungsgemäßen Verfahren zum Bestimmen eines Abstandes zwischen einem Lasersystem und einer Projektionsfläche wird ein Retroreflektor verwendet, der auf der Projektionsfläche angeordnet wird. Der Retroreflektor ist in einer Umfangsrichtung abwechselnd aus reflektierenden Abschnitten, die einen Laserstrahl des Lasersystems reflektieren, und absorbierenden Abschnitten, die einen Laserstrahl des Lasersystems absorbieren, zusammengesetzt. Das Lasersystem sendet einen Laserstrahl aus, der mit einer Drehzahl um die Rotationsachse rotiert. Das Lasersystem und der Retroreflektor werden so zueinander ausgerichtet, dass ein Laserstrahl des Lasersystems auf den Retroreflektor auftrifft. Der Laserstrahl wird am Retroreflektor reflektiert und trifft auf einen Detektor. Der Detektor bestimmt fortlaufend die Intensität des reflektierten Laserstrahls, die als Funktion der Zeit dargestellt wird.

Die Zusammensetzung des Retroreflektors aus reflektierenden Abschnitten, die den Laserstrahl reflektieren, und absorbierenden Abschnitten, die den Laserstrahl absorbieren, führt zu einer sinusförmigen Intensitätskurve mit Maximalwerten und Minimalwerten. Die Kontrolleinrichtung des Lasersystems bestimmt aus der Intensitätskurve eine Zeitdifferenz zwischen Maximalwerten, zwischen Minimalwerten oder zwischen Maximal- und Minimalwerten. Der Abstand zwischen dem Lasersystem und der Projektionsfläche wird mittels der Zeitdifferenz, der Drehzahl des Lasersystems und der Breite der absorbierenden und reflektierenden Abschnitte berechnet.

Das erfindungsgemäße Verfahren weist den Vorteil auf, dass der Abstand zwischen dem Lasersystem und der Projektionsfläche ohne Änderungen bzw. mit geringeren Änderungen am Aufbau des Lasersystems bestimmt werden kann. Der Retroreflektor ist außerhalb des Lasersystems angeordnet. Um die Intensität eines am Retroreflektor reflektierten Laserstrahls messen zu können, wird ein Detektor benötigt.

Die Erfindung betrifft weiterhin ein Verfahren zum Anpassen einer Brennweite einer Fokussieroptik eines Lasersystems abhängig von einem Abstand zwischen dem Lasersystem und einer Projektionsfläche, wobei der Abstand mittels des Verfahrens nach Anspruch 1 bestimmt wurde. Als Fokussieroptik ist ein optisches Element definiert, das eine endliche Brennweite aufweist und einen auftreffenden Laserstrahl fokussiert. Ein fokussierter Laserstrahl weist im Bereich der Fokuslage einen kleineren Strahldurchmesser auf als ein nichtfokussierter Laserstrahl.

Wenn der Abstand zwischen dem Lasersystem und der Projektionsfläche mittels des erfindungsgemäßen Verfahrens bestimmt wurde, kann die Brennweite einer Fokussieroptik, die im Strahlengang des Lasersystems angeordnet ist, an den Abstand angepasst werden. Dies hat den Vorteil, dass auf der Projektionsfläche eine scharf begrenzte linienförmige Lasermarkierung erzeugt werden kann, die eine hohe Qualität aufweist. Je schmaler die linienförmige Lasermarkierung auf der Projektionsfläche ist, umso genauer kann der Bediener die Nivellier- oder Markierungsarbeiten ausführen. Außerdem ist eine scharf begrenzte linienförmige Lasermarkierung für den Bediener besser sichtbar, da die verfügbare Leistung von maximal 1 mW bei Lasersystemen der Laserklasse 2 oder 2M auf eine kleinere Fläche verteilt wird und eine höhere Leistungsdichte resultiert.

Die Erfindung betrifft weiterhin eine Vorrichtung zur Ausführung eines Verfahrens zum Bestimmen eines Abstandes zwischen einem Lasersystem und einer Projektionsfläche nach Anspruch 1, aufweisend das Lasersystem, einen Detektor und einen Retroreflektor. Die Vorrichtung zur Ausführung des erfindungsgemäßen Verfahrens zum Bestimmen des Abstandes umfasst ein Lasersystem, das als Rotationslaser ausgebildet ist, einen Detektor und einen Retroreflektor. Der Retroreflektor befindet sich außerhalb des Lasersystems auf der Projektionsfläche. Um die Intensität eines am Retroreflektor reflektierten Laserstrahls messen zu können, wird der Detektor benötigt.

Bevorzugt ist der Retroreflektor in einer Umfangsrichtung abwechselnd aus absorbierenden Abschnitten, die einen Laserstrahl des Lasersystems absorbieren, und reflektierenden Abschnitten, die einen Laserstrahl des Lasersystems reflektieren, zusammengesetzt. Die Verwendung eines Retroreflektors mit einer periodischen Struktur aus absorbierenden und reflektierenden Abschnitten ermöglicht, den Abstand zwischen dem Lasersystem und der Projektionsfläche zu berechnen. Da die Zeit, die der Laserstrahl benötigt, um die absorbierenden und reflektierenden Abschnitte zu passieren, bei konstanter Drehzahl des Lasersystems vom Abstand abhängt, kann der Abstand mithilfe einer Zeitmessung bestimmt werden.

Bevorzugt ist der Detektor ausgebildet, die Intensität eines am Retroreflektor reflektierten Laserstrahls zu bestimmen. Die Zeit, die der Laserstrahl benötigt, um die absorbierenden und reflektierenden Abschnitte zu passieren, kann in der Intensität eines reflektierten Laserstrahls bestimmt werden. Der Detektor misst nur dann eine Intensität, wenn der Laserstrahl auf einen reflektierenden Abschnitt trifft und dort reflektiert wird. Wenn der Laserstrahl auf einen absorbierenden Abschnitt des Retroreflektors trifft, misst der Detektor keine Intensität.

In einer ersten Variante weist das Lasersystem eine Strahlteilungsoptik auf, die ausgebildet ist, einen am Retroreflektor reflektierten Laserstrahl auf den Detektor umzulenken. Die Strahlteilungsoptik ist im Strahlengang des Laserstrahls bevorzugt zwischen einer Kollimationsoptik und der Strahlumlenkoptik angeordnet.

In einer zweiten Variante sind der Detektor und die Laserstrahlquelle in eine Laserdiode integriert. Die Verwendung einer speziellen Laserdiode, die den Detektor und die Laserstrahlquelle umfasst, hat den Vorteil, dass am Lasersystem keine Anpassungen erforderlich sind. Diese spezielle Laserdiode ist verfügbar und wird in bekannten Rotationslasern beispielsweise eingesetzt, um sicherzustellen, dass die maximal zulässige Laserleistung einer Laserklasse nicht überschritten wird.

**Ausführungsbeispiele**

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:

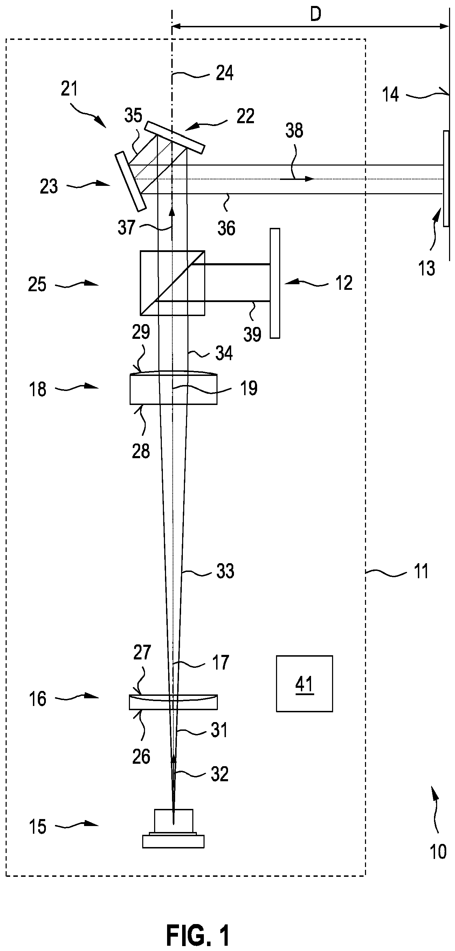

FIG. 1      eine erste Ausführungsform einer erfindungsgemäßen Vorrichtung, die einen Rotationslaser, einen Detektor und einen Retroreflektor aufweist und die zur Ausführung eines Verfahrens zum Bestimmen eines Abstandes zwischen dem Rotationslaser und einer Projektionsfläche ausgebildet ist, in einer schematischen Darstellung;

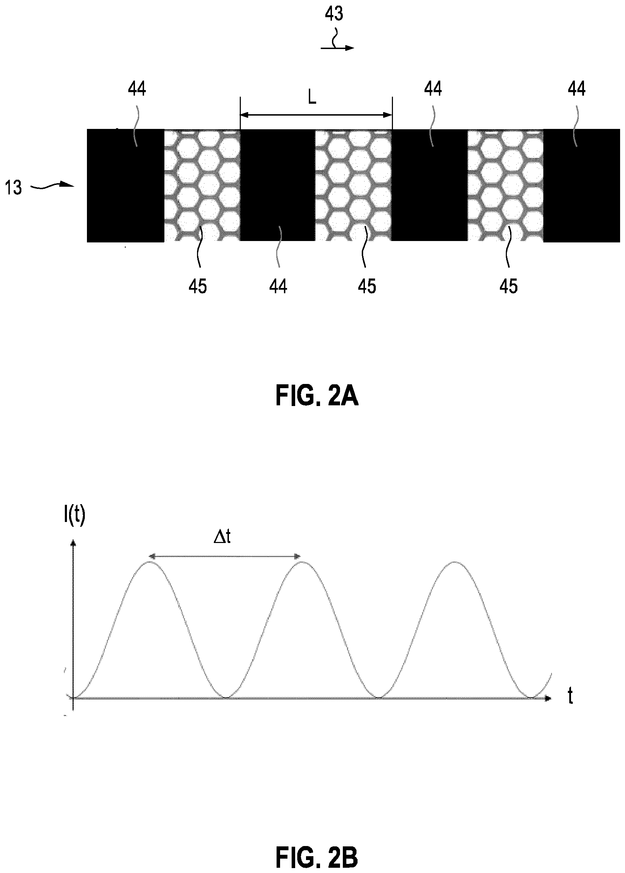

FIGN. 2A, B den Aufbau des Retroreflektors der FIG. 1 (FIG. 2A) und eine Intensitätskurve eines am Retroreflektor reflektierten Laserstrahls (FIG. 2B); und

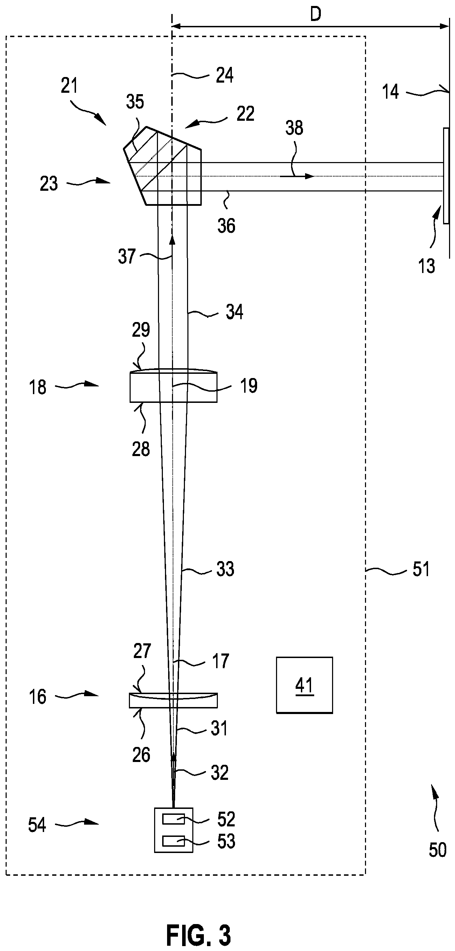

FIG. 3 eine zweite Ausführungsform einer erfindungsgemäßen Vorrichtung, die einen Rotationslaser, einen Detektor und einen Retroreflektor aufweist und die zur Ausführung eines Verfahrens zum Bestimmen eines Abstandes zwischen dem Rotationslaser und einer Projektionsfläche ausgebildet ist, in einer schematischen Darstellung.

**FIG. 1** zeigt eine erste Ausführungsform einer erfindungsgemäßen Vorrichtung **10,** die ein als Rotationslaser ausgebildetes Lasersystem **11,** einen Detektor **12** und einen Retroreflektor **13** aufweist, in einer schematischen Darstellung. Die Vorrichtung 10 ist zur Ausführung eines Verfahrens zum Bestimmen eines Abstandes **D** zwischen dem Lasersystem 11 und einer Projektionsfläche **14** ausgebildet.

Der Rotationslaser 11 umfasst eine Laserstrahlquelle **15,** eine als Fokussieroptik ausgebildete erste Strahlformungsoptik **16** mit einer ersten optischen Achse **17,** eine als Kollimationsoptik ausgebildete zweite Strahlformungsoptik **18** mit einer zweiten optischen Achse **19** und eine Strahlumlenkoptik **21** mit einer ersten Spiegelfläche **22** und einer zweiten Spiegelfläche **23**. Die Strahlumlenkoptik 21 ist um eine Rotationsachse **24** verstellbar ausgebildet. Die optischen Komponenten des Rotationslasers 11 sind in der Reihenfolge Laserstrahlquelle 15, Fokussieroptik 16, Kollimationsoptik 18 und Strahlumlenkoptik 21 angeordnet. Dabei sind die erste optische Achse 17, die zweite optische Achse 19 und die Rotationsachse 24 koaxial zueinander angeordnet.

Um den Abstand D zwischen dem Rotationslaser 11 und der Projektionsfläche 14 zu bestimmen, weist der Rotationslaser 11 zusätzlich eine Strahlteilungsoptik **25** auf. Die Strahlteilungsoptik 25 ist im Ausführungsbeispiel zwischen der Kollimationsoptik 18 und der Strahlumlenkoptik 21 angeordnet. Alternativ kann die Strahlteilungsoptik 25 zwischen der Laserstrahlquelle 15 und der Fokussieroptik 16 oder zwischen der Fokussieroptik 16 und der Kollimationsoptik 18 angeordnet sein.

Die Laserstrahlquelle 15 kann als Halbleiterlaser mit einer Wellenlänge im sichtbaren Spektrum ausgebildet sein, beispielsweise als roter Halbleiterlaser mit einer Wellenlänge von 635 nm oder als grüner Halbleiterlaser mit einer Wellenlänge zwischen 510 und 555 nm. Die Eigenschaften der weiteren Komponenten des Rotationslasers 11 sind an die Wellenlänge der Laserstrahlquelle 15 angepasst.

Hinter der Laserstrahlquelle 15 ist die Fokussieroptik 16 angeordnet, die einen auftreffenden Laserstrahl umformt. Die Fokussieroptik 16 weist eine Eintrittsfläche **26** und eine Austrittsfläche **27** auf. Die Fokussieroptik 16 ist als Strahlformungsoptik mit einer verstellbaren Brennweite ausgebildet. Als erste optische Achse 17 der Fokussieroptik 16 ist eine Gerade definiert, die durch den Krümmungsmittelpunkt einer gekrümmten Fläche verläuft und senkrecht auf einer planen Fläche steht oder durch den ersten Krümmungsmittelpunkt einer ersten gekrümmten Fläche und den zweiten Krümmungsmittelpunkt einer zweiten gekrümmten Fläche verläuft.

Hinter der Fokussieroptik 16 ist die Kollimationsoptik 18 angeordnet, die einen auftreffenden Laserstrahl umformt. Die Kollimationsoptik 18 weist eine plane Eintrittsfläche **28** und eine gekrümmte Austrittsfläche **29** auf. Alternativ kann die Eintrittsfläche als gekrümmte Fläche und die Austrittsfläche als plane Fläche ausgebildet sein oder die Ein- und Austrittsflächen sind als gekrümmte Flächen ausgebildet. Als zweite optische Achse 19 der Kollimationsoptik 18 ist eine Gerade definiert, die durch den Krümmungsmittelpunkt einer gekrümmten Fläche verläuft und senkrecht auf einer planen Fläche steht oder durch den ersten Krümmungsmittelpunkt einer ersten gekrümmten Fläche und den zweiten Krümmungsmittelpunkt einer zweiten gekrümmten Fläche verläuft.

Die Laserstrahlquelle 15 erzeugt einen divergenten Laserstrahl **31,** der entlang einer Ausbreitungsrichtung **32** ausgesandt wird und auf die Fokussieroptik 16 gerichtet ist. Der divergente Laserstrahl 31 trifft auf die Fokussieroptik 16, die einen fokussierten Laserstrahl **33** erzeugt. Der fokussierte Laserstrahl 33 trifft auf die Kollimationsoptik 18, die den fokussierten Laserstrahl 33 in einen kollimierten Laserstrahl **34** umformt. Der kollimierte Laserstrahl 34 passiert die Strahlteilungsoptik 25 ungehindert und trifft auf die Strahlumlenkoptik 21. An der ersten Spiegelfläche 22 erfolgt eine erste Umlenkung des kollimierten Laserstrahls 34 und an der zweiten Spiegelfläche 23 erfolgt eine zweite Umlenkung des kollimierten Laserstrahls 34.

Der an der ersten Spiegelfläche 21 umgelenkte Laserstrahl wird als einfach umgelenkter Laserstrahl **35** und der an der zweiten Spiegelfläche 22 umgelenkte Laserstrahl als zweifach umgelenkter Laserstrahl **36** bezeichnet. Die erste und zweite Spiegelfläche 21, 22 sind so zueinander ausgerichtet, dass eine Ausbreitungsrichtung **37** des in die Strahlumlenkoptik 21 eintretenden kollimierten Laserstrahls 34 parallel zu einer Ausbreitungsrichtung **38** des aus der Strahlumlenkoptik 21 austretenden zweifach umgelenkten Laserstrahls 36 angeordnet ist.

Der zweifach umgelenkte Laserstrahl 36 verlässt den Rotationslaser 21 und trifft auf den Retroreflektor 13, der auf der Projektionsfläche 14 angeordnet ist. Der Laserstrahl 36 rotiert um die Rotationsachse 24 und kann vom Retroreflektor 13 reflektiert werden. Ein vom Retroreflektor 13 reflektierter Laserstrahl **39** trifft auf die zweite Spiegelfläche 23, an der eine erste Umlenkung des reflektierten Laserstrahls 39 erfolgt, auf die erste Spiegelfläche 22, an der eine zweite Umlenkung des reflektierten Laserstrahls 39 erfolgt, auf die Strahlteilungsoptik 25, an der eine dritte Umlenkung des reflektierten Laserstrahls 39 erfolgt, und auf den Detektor 12, der eine Intensität I des reflektierten Laserstrahls 39 misst. Der Detektor 12 ist mit einer Kontrolleinrichtung **41** des Rotationslasers 11 verbunden, die die Intensität I des reflektierten Laserstrahls 39 als Funktion der Zeit t in einer Intensitätskurve **I(t)** darstellt.

**FIGN. 2A, B** zeigen den Aufbau des Retroreflektors 13 der FIG. 1 (FIG. 2A) und die Intensitätskurve I(t) des am Retroreflektor 13 reflektierten Laserstrahls 39 (FIG. 2B).

Der Retroreflektor 13 ist in einer Umfangsrichtung **43** abwechselnd aus absorbierenden Abschnitten **44**, die den Laserstrahl absorbieren, und reflektierenden Abschnitten **45**, die den Laserstrahl reflektieren, zusammengesetzt. Der Detektor 12 misst nur dann eine Intensität, wenn der Laserstrahl auf einen reflektierenden Abschnitt 45 des Retroreflektors 13 trifft und dort reflektiert wird. Wenn der Laserstrahl auf einen absorbierenden Abschnitt 44 des Retroreflektors 13 trifft, misst der Detektor 12 keine Intensität.

Die periodische Struktur des Retroreflektors 13 aus absorbierenden Abschnitten 44 und reflektierenden Abschnitten 45 ermöglicht, den Abstand D zwischen dem Rotationslaser 11 und der Projektionsfläche 14 aus einer Intensitätskurve zu berechnen. Da die Zeit, die der Laserstrahl benötigt, um die absorbierenden Abschnitte 44 und reflektierenden Abschnitte 45 zu passieren, bei einer konstanten Drehzahl **RPM** des Rotationslasers 11 und einer Breite L der absorbierenden und reflektierenden Abschnitte 44, 45 vom Abstand D abhängt, kann der Abstand D mithilfe der Zeit bestimmt werden. Die Zeit, die der Laserstrahl benötigt, um die absorbierenden Abschnitte 44 und reflektierenden Abschnitte 45 zu passieren, kann in der Intensitätskurve I(t) des reflektierten Laserstrahls bestimmt werden.

Im Ausführungsbeispiel wird eine Zeitdifferenz Δt zwischen benachbarten Maximalwerten in der Intensitätskurve I(t) bestimmt; alternativ kann die Zeitdifferenz zwischen benachbarten Minimalwerten oder zwischen Maximal- und Minimalwerten bestimmt werden. Für den Abstand D zwischen dem Lasersystem 11 und der Projektionsfläche 14 gilt der Zusammenhang:

$$D = \frac{0.5 \cdot L}{\sin(\pi \cdot RPM \cdot \Delta t/60)}$$

Die Drehzahl RPM des Lasersystems 11 ist eine bekannte Größe für die Bestimmung des Abstandes und wird üblicherweise in der Einheit Umdrehungen pro Minute angegeben.

**FIG. 3** zeigt eine zweite Ausführungsform einer erfindungsgemäßen Vorrichtung **50**, die ein als Rotationslaser ausgebildetes Lasersystem **51,** einen Detektor **52** und den Retroreflektor 13 aufweist, in einer schematischen Darstellung. Die Vorrichtung 50 ist zur Ausführung eines Verfahrens zum Bestimmen eines Abstandes D zwischen dem Lasersystem 51 und der Projektionsfläche 14 ausgebildet.

Der Vorrichtung 50 unterscheidet sich von der Vorrichtung 10 der FIG. 1 dadurch, dass die Strahlteilungsoptik 25 entfällt und sich der Detektor, der die Intensität des reflektierten Laserstrahls misst, an einer anderen Position befindet.

Der Rotationslaser 51 umfasst eine Laserstrahlquelle **53** und den Detektor 52, die in eine Laserdiode **54** integriert sind, die erste Strahlformungsoptik 16 (Fokussieroptik) mit der ersten optischen Achse 17, die zweite Strahlformungsoptik 18 (Kollimationsoptik) mit der zweiten optischen Achse 19 und die Strahlumlenkoptik 21 mit der ersten Spiegelfläche 22 und der zweiten Spiegelfläche 23. Die optischen Komponenten des Rotationslasers 51 sind in der Reihenfolge Laserdiode 54, Fokussieroptik 16, Kollimationsoptik 18 und Strahlumlenkoptik 21 angeordnet.

Die Verwendung der Laserdiode 54, die die Laserstrahlquelle 53 und den Detektor 52 umfasst, hat den Vorteil, dass am Lasersystem keine Anpassungen erforderlich sind. Diese spezielle Laserdiode 54 ist verfügbar und wird in bekannten Rotationslasern beispielsweise eingesetzt, um sicherzustellen, dass die maximal zulässige Laserleistung einer Laserklasse nicht überschritten wird.

**Patentansprüche**

1. Verfahren zum Bestimmen eines Abstandes (D) zwischen einem Lasersystem (11; 51) und einer Projektionsfläche (14) mit den Schritten:

   ▪ Anordnen eines Retroreflektors (13) auf der Projektionsfläche (14), wobei der Retroreflektor (13) in einer Umfangsrichtung (43) abwechselnd aus absorbierenden Abschnitten (44), die einen Laserstrahl des Lasersystems absorbieren, und reflektierenden Abschnitten (45), die einen Laserstrahl des Lasersystems reflektieren, zusammengesetzt ist,
   ▪ Aussenden eines Laserstrahls (31) und Rotieren des Laserstrahls mit einer Drehzahl (RPM) um eine Rotationsachse (24),
   ▪ Bestimmen einer Intensität (I) eines am Retroreflektor (13) reflektierten Laserstrahls (39) mittels eines Detektors (12; 52),
   ▪ Darstellen der Intensität des reflektierten Laserstrahls (39) abhängig von der Zeit in einer Intensitätskurve (I(t)),
   ▪ Bestimmen einer Zeitdifferenz (Δt) zwischen Maximalwerten, zwischen Minimalwerten oder zwischen Maximal- und Minimalwerten der Intensitätskurve und

▪ Berechnen des Abstandes (D) zwischen dem Lasersystem (11; 51) und der Projektionsfläche (14) mittels der Zeitdifferenz (Δt), der Drehzahl (RPM) des Lasersystems (11; 51) und einer Breite (L) der absorbierenden und reflektierenden Abschnitte (44, 45).

2. Verfahren zum Anpassen einer Brennweite einer Fokussieroptik (16) eines Lasersystems (11; 51) abhängig von einem Abstand (D) des Lasersystems (11; 51) zu einer Projektionsfläche (14), wobei der Abstand (D) mittels des Verfahrens nach Anspruch 1 bestimmt wurde.

3. Vorrichtung (10; 50) zur Ausführung eines Verfahrens zum Bestimmen eines Abstandes (D) zwischen einem Lasersystem (11; 51) und einer Projektionsfläche (14) nach Anspruch 1, aufweisend das Lasersystem (11; 51), einen Detektor (12; 52) und einen Retroreflektor (13).

4. Vorrichtung nach Anspruch 3, **dadurch gekennzeichnet, dass** der Retroreflektor (13) in einer Umfangsrichtung (43) abwechselnd aus absorbierenden Abschnitten (44), die einen Laserstrahl des Lasersystems absorbieren, und reflektierenden Abschnitten (45), die einen Laserstrahl des Lasersystems reflektieren, zusammengesetzt ist.

5. Vorrichtung nach Anspruch 3, **dadurch gekennzeichnet, dass** der Detektor (12; 52) ausgebildet ist, die Intensität (I) eines am Retroreflektor (13) reflektierten Laserstrahls (39) zu bestimmen.

6. Vorrichtung nach Anspruch 5, **dadurch gekennzeichnet, dass** das Lasersystem (11) eine Strahlteilungsoptik (25) aufweist, die ausgebildet ist, den am Retroreflektor (13) reflektierten Laserstrahl (39) auf den Detektor (12) umzulenken.

7. Vorrichtung nach Anspruch 5, **dadurch gekennzeichnet, dass** der Detektor (52) und die Laserstrahlquelle (53) in eine Laserdiode (54) integriert sind.

**FIG. 1**

43

44    L    44    44

13

45    44    45    45

**FIG. 2A**

I(t)

Δt

t

**FIG. 2B**

**FIG. 3**

Europäisches Patentamt
European Patent Office
Office européen des brevets

# EUROPÄISCHER RECHERCHENBERICHT

Nummer der Anmeldung

EP 19 21 6525

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 673 287 A (RICKUS EDMUND [DE]) 16. Juni 1987 (1987-06-16) * Spalte 1, Zeile 4 - Zeile 6 * * Spalte 2, Zeile 13 - Zeile 25 * * Spalte 2, Zeile 35 - Zeile 40 * * Spalte 2, Zeile 52 - Zeile 59 * * Spalte 3, Zeile 13 - Zeile 30 * * Spalte 4, Zeile 10 - Zeile 14 * * Abbildungen 1-3 * ----- | 1-7 | INV. G01C15/00 G01C15/06 |
| A | EP 1 524 498 A1 (TOPCON CORP [JP]) 20. April 2005 (2005-04-20) * Absätze [0001], [0012], [0011], [0019], [0038], [0051] - [0052], [0055] * * Abbildungen 6-11 * ----- | 1-7 | |

RECHERCHIERTE SACHGEBIETE (IPC)

G01C

Der vorliegende Recherchenbericht wurde für alle Patentansprüche erstellt

| Recherchenort | Abschlußdatum der Recherche | Prüfer |
|---|---|---|
| Den Haag | 29. Mai 2020 | Eitner, Christian |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 6525

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-05-2020

| Im Recherchenbericht angeführtes Patentdokument | Datum der Veröffentlichung | Mitglied(er) der Patentfamilie | Datum der Veröffentlichung |
|---|---|---|---|
| US 4673287 A | 16-06-1987 | DE 3321990 A1<br>FR 2548355 A1<br>US 4673287 A | 20-12-1984<br>04-01-1985<br>16-06-1987 |
| EP 1524498 A1 | 20-04-2005 | EP 1524498 A1<br>JP 4282432 B2<br>JP 2005121388 A<br>US 2005077454 A1 | 20-04-2005<br>24-06-2009<br>12-05-2005<br>14-04-2005 |

EPO FORM P0461

Für nähere Einzelheiten zu diesem Anhang : siehe Amtsblatt des Europäischen Patentamts, Nr.12/82